(19) **Europäisches Patentamt**
**European Patent Office**
**Office européen des brevets**

(11) **EP 4 283 334 A1**

(12) **EUROPEAN PATENT APPLICATION**

(43) Date of publication:
**29.11.2023 Bulletin 2023/48**

(21) Application number: **22175014.4**

(22) Date of filing: **24.05.2022**

(51) International Patent Classification (IPC):
**G01S 13/08** (2006.01)     **G01S 7/02** (2006.01)
**H04B 1/3827** (2015.01)

(52) Cooperative Patent Classification (CPC):
**G01S 13/08; G01S 7/0232; H04B 1/3838**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **Blücher Brink, Stig**
**9220 Aalborg Øst (DK)**
• **Knudsen, Knud**
**9440 Aabybro (DK)**

(74) Representative: **Swindell & Pearson Limited**
**48 Friar Gate**
**Derby DE1 1GY (GB)**

(54) **RADAR MEASUREMENTS FOR CONTROLLING TRANSMITTED POWER LEVELS**

(57)     Examples of the disclosure relate to management of radar measurements for controlling transmitted power levels. Examples of the disclosure relate to apparatus (110), methods and computer programs. The apparatus comprise means for obtaining distance data from one or more radar measurements wherein the radar measurements are performed during a measurement interval; determining an indication of accuracy from the obtained distance data; determining a lower bound for a reliable distance measurement based on the distance data and the indication of accuracy; and controlling transmitted power based on the lower bound for a reliable distance measurement.

FIG. 4

**Description**

TECHNOLOGICAL FIELD

Examples of the disclosure relate to management of radar measurements for controlling transmitted power levels. Some relate to management of radar measurements for User Equipments (UEs) communicating in NR networks.

BACKGROUND

A UE transmitting wireless signals is required to comply with relevant safety guidelines so as to limit the amount of Radio Frequency (RF) electromagnetic fields to which people are exposed. These safety guidelines require that the transmit power of a UE cannot exceed a certain level and also limit the Equivalent Isotopically Radiated Power (EIRP).
If it is not known whether or not a human body is close to a UE then the UE has to reduce the Transmission (TX) power to below maximum power if directional antennas are being used. This is to ensure that a UE is not radiating too much power towards a human body.
Reliable body detection mechanisms can therefore enable determination of whether or not a body is close to the UE and can allow maximum power to be used when appropriate.

BRIEF SUMMARY

According to various, but not necessarily all, examples of the disclosure there is provided an apparatus comprising means for:

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

The indication of accuracy may be based on a standard deviation of the obtained distance data.
The standard deviation may be determined based on a signal to noise ratio from the obtained distance data.
The indication of accuracy may be determined using a Cramer-Rao lower bound.
The lower bound for a reliable distance measurement may be determined by subtracting the standard deviation adjusted by a scaling factor from the obtained distance data.
A power level used for transmission may be reduced if the lower bound for a reliable distance measurement is below a threshold.
The means may be for updating the indication of accuracy in a subsequent measurement interval.
The measurement interval may comprise at least one of: an uplink (UL) gap, a downlink (DL) gap, measurement windows, unscheduled slots.
The radar measurements may be at least one of: in band measurements, out-of-band measurements.
The radar measurements may comprise one or more measurements made during an ongoing connection.
According to various, but not necessarily all, examples of the disclosure there may be provided an apparatus as described herein wherein the apparatus comprises a UE.
According to various, but not necessarily all, examples of the disclosure there may be provided a method comprising:

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

According to various, but not necessarily all, examples of the disclosure there may be provided a computer program comprising computer program instructions that, when executed by processing circuitry, cause:

obtaining distance data from one or more radar measurements wherein the radar measurements are performed during a measurement interval;

determining an indication of accuracy from the obtained distance data;

determining a lower bound for a reliable distance measurement based on the distance data and the indication of accuracy; and

controlling transmitted power based on the lower bound for a reliable distance measurement.

BRIEF DESCRIPTION

Some examples will now be described with reference to the accompanying drawings in which:

FIG. 1 shows an example network;
FIG. 2 shows an example radar measurement;
FIG. 3 shows an example method;
FIG. 4 shows another example method;
FIG. 5 shows simulation results;
FIG. 6 shows simulation results;
FIG. 7 shows simulation results;
FIG. 8 shows simulation results;
FIG. 9 shows simulation results;
FIG. 10 shows an example measurement interval; and
FIG. 11 shows an example controller.

DEFINITIONS

| AWGN | Additive White Gaussian Noise |
| CRB | Cramer-Rao lower bound |
| DL | Downlink |
| gNB | NR base station |
| MPE | Maximum Permissible Exposure |
| OFDM | Orthogonal Frequency Division Multiplexing |
| RF | Radio Frequency |
| RX | Reception |
| SAR | Specific Absorption Rate |
| SCS | Sub Carrier Spacing |
| SNR | Signal to Noise Ratio |
| TX | Transmission |
| UGL | Uplink gap length |
| UL | Uplink |

DETAILED DESCRIPTION

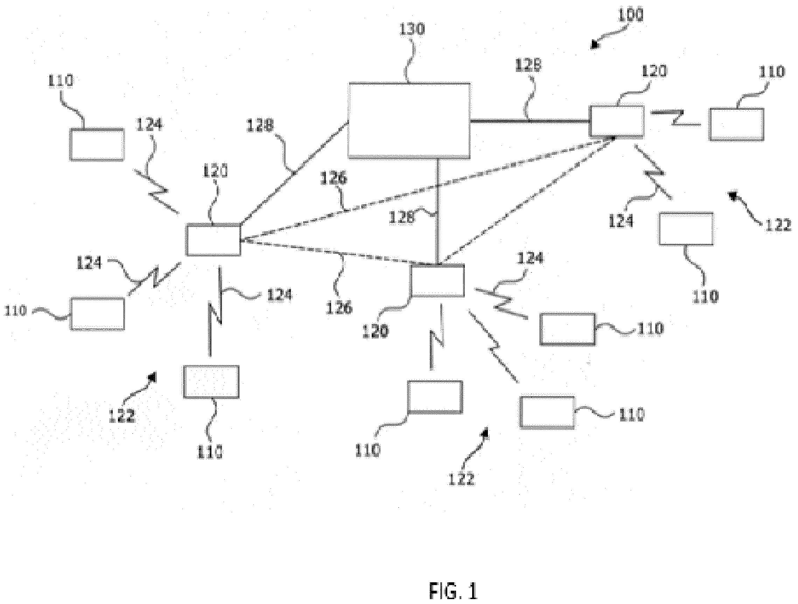

Fig. 1 illustrates an example of a network 100 comprising a plurality of network nodes including terminal nodes 110, access nodes 120 and one or more core nodes 130. The terminal nodes 110 and access nodes 120 communicate with each other. The one or more core nodes 130 communicate with the access nodes 120.

The one or more core nodes 130 can, in some examples, communicate with each other. The one or more access nodes 120 can, in some examples, communicate with each other.

The network 100 can be a cellular network comprising a plurality of cells 122 each served by an access node 120. In this example, the interface between the terminal nodes 110 and an access node 120 defining a cell 122 is a wireless interface 124.

The access node 120 comprises a cellular radio transceiver. The terminal nodes 110 comprise a cellular radio transceiver.

In the example illustrated the cellular network 100 is a third generation Partnership Project (3GPP) network in which the terminal nodes 110 are user equipment (UE) and the access nodes 120 are base stations.

In the particular example illustrated the network 100 is a Universal Terrestrial Radio Access network (UTRAN). The UTRAN consists of UTRAN NodeBs 120, providing the UTRA user plane and control plane (RRC) protocol terminations towards the UE 110. The NodeBs 120 are interconnected with each other and are also connected by means of the interface 128 to the Mobility Management Entity (MME) 130.

The term 'user equipment' is used to designate mobile equipment comprising a smart card for authentication/encryption etc such as a subscriber identity module (SIM). In other examples the term 'user equipment' is used to designate mobile equipment comprising circuitry embedded as part of the user equipment for authentication/ encryption such as software SIM.

The NodeB can be any suitable base station. A base station is an access node 120. It can be a network element in radio access network responsible for radio transmission and reception in one or more cells to or from the user equipment.

The UTRAN can be a 4G or 5G network, for example. It can for example be a New Radio (NR) network that uses gNB or eNB as access nodes 120. New radio is the 3GPP name for 5G technology.

Such networks 100 can also comprise next generation mobile and communication network, for example, a 6G network.

In such networks 100 there are regulatory requirements that limit the amount of RF electromagnetic radiation to which humans near the UE 110 can be exposed. This may limit the TX power used by UEs 110 using directional antennas.

The limitations on the amount of RF electromagnetic radiation to which a human can be exposed can be averaged over a predetermined time period. For example, it can be determined that the radiated power per unit area does not exceed $1mW/cm^2$ averaged over 4 second.

The limitations on the amount of RF electromagnetic radiation to which a human can be exposed may be a regulatory requirement with zero tolerance. That is, the limit cannot be exceeded (taking into account any averaging over time periods). Therefore, if it cannot be determined whether or not a human body is close to the UE 110 it has to be assumed that there is human body close to the UE 110 and the TX power has to be reduced. The power can only be increased when it is determined that there is not a human body 110 close to the UE 110.

A reliable method of determining if a human body is close to the UE 110 would therefore prevent the TX power from being reduced unnecessarily. In some networks 100 a UE 110 can use radar measurements to determine whether or not a human body is close to the UE 110. In order to reliable determine if a human body is close to the UE 110 reliable distance measurements are needed.

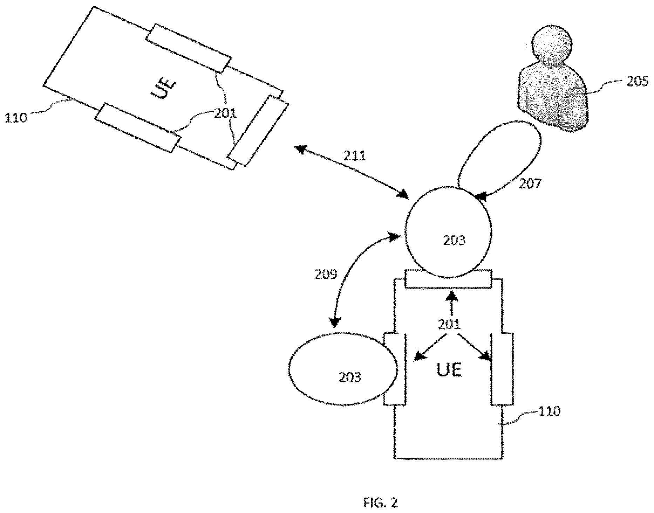

Fig. 2 shows an example scenario in which radar measurements are used to determine whether or not a human body 205 is close to a UE 110.

In the example of Fig. 2 a UE 110 is shown. The UE 110 comprises a plurality of panels 201. The panels 201 are located on different sides of the UE 110 and enable directional transmission by the UE 110. In the example of Fig. 2 the UE 110 comprises three panels 201. The UE 110 can comprise any suitable number of panels 201 in other examples.

The respective panels 201 can comprise a plurality of different antennas or antenna elements. The antennas can be arranged in an antenna array. The antenna array can allow for beamforming and directional transmission from the respective panels 201.

The respective panels 201 can be configured to transmit radar beams 203 for detecting whether or not a human body 205 is in proximity to the UE 110. The radar beams 203 will be reflected by an object close to the UE 110 as indicated by arrow 207 in Fig. 2.

By detecting which beams are reflected back to the UE 110 it can be determined if there is an object close to the UE 110, in the direction in which the object is located and whether or not the object is a human body 205. Distance measurements to the nearby objects can be obtained by determining the travel time for the reflected radar signals.

The radar measurements can be affected by interference. This will affect the reliability of the radar measurements. The interference that might affect the radar beams can comprise coupling of the radar beams 203 transmitted by the UE 110 itself as shown by arrow 209 in Fig. 2. This causes intra-UE interference. The interference that might affect the radar beams can also comprise coupling of radar beams 203 transmitted by other nearby UEs 110 as shown by arrow 211 in Fig. 2.

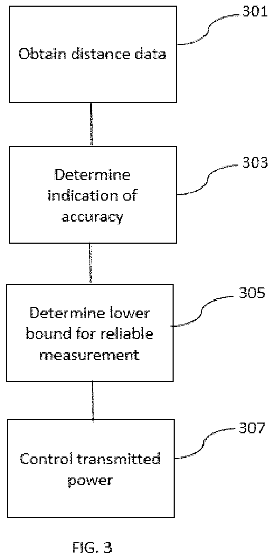

Fig. 3 shows an example method according to examples of the disclosure. The method could be implemented by a UE 110, a controller of a UE 110 or by any other suitable apparatus. The method enables reliable distances estimates to be obtained for radar measurements. The increase in reliability reduces the occasions on which the transmission power has to be reduced because it reduces the number of occasions on which it is uncertain whether an object such as a human body is close to the UE 110.

At block 301 the method comprises obtaining distance data from one or more radar measurements. The distance data can be obtained from the travel time of a reflected radar signal. The distance data can comprise a plurality of samples where respective samples indicate an estimated distance to an object from which a radar signal has been reflected.

The radar measurements could be made using the Orthogonal Frequency-Division Multiplexing (OFDM) radar concept or any other suitable process

The radar measurements can be performed during a measurement interval. Any suitable part of the network 100 can allocate the measurement interval. In some examples the measurement interval can be allocated by a gNB 120 or by any other suitable network device or combination of network devices.

The measurement interval can be any interval in communications between the UE 110 and the network 100 that can be used for making the radar measurements. The measurement intervals can comprise an uplink (UL) gap, a downlink (DL) gap, measurement windows, unscheduled slots or any other suitable gaps. During the measurement interval there might not be any ongoing communication between the UE 110 and the network 100.

The radar measurements can comprise in-band measurements and/or out-of-band measurements. The in-band measurements can use resources allocated for communication between the UE 110 and the network 100. The out-of-band measurements can use different resources to those allocated for communication between the UE 110 and the network 100.

At block 303 the method comprises determining an indication of accuracy from the obtained distance data. The indication of accuracy provides an indication of the reliability of the obtained distance data. The indication of accuracy provides an indication of the probability that an actual distance to an object is below a threshold based on the obtained data points.

The indication of accuracy can be determined using any suitable process. The indication of accuracy can be determined using statistical analysis of the obtained distance data. The indication of accuracy can be determined by analysing a spread or other characteristic of the obtained distance data. In some examples the indication of accuracy can be based on a standard deviation of the obtained distance data. The standard deviation can be determined using any suitable process. In some examples the standard deviation can be determined based on a signal to noise ratio from the obtained distance data. In some examples the indication of accuracy can be determined using a Cramer-Rao lower bound.

Once the indication of accuracy has been obtained the method comprises, at block 305, determining a lower bound for a reliable distance measurement based on the distance data and the indication of accuracy. The lower bound provides a threshold that indicates the lowest reliable distance estimate. The lower bound can indicate a distance that can be confidently assumed to be lower than the actual distance to the object. The confidence with which the lower bound can be assumed to be lower than the actual distance to the object can be controlled by controlling the method used to determine the lower bound.

In some examples the lower bound for a reliable distance measurement can be determined by subtracting the standard deviation adjusted by a scaling factor from the obtained distance data. The value of the scaling factor can be selected based on how reliable the distance measurement needs to be. For example, the scaling factor could be increased if a higher level of reliability is required.

At block 307 the method comprises controlling transmitted power based on the lower bound for a reliable distance measurement. Controlling the transmitted power can comprise reducing a power level used for transmission if the lower bound for a reliable distance measurement is below a threshold. That is, if it is determined that the lower bound is below a threshold it can be assumed that an object is close to the UE 110. In such cases the power used for transmission can be reduced so as to avoid exceeding Maximum Power Exposure (MPE) limits. If it is determined that the lower bound is above the threshold it can be assumed that a body is not close to the UE 110 and in such cases the power used for transmission does not need to be reduced. The improved reliability in the distance measurements provided as a result of the indication of accuracy and the finding the lower bound for reliability reduces the number of times that an object is incorrectly assumed to be within the threshold distance and reduces the occasions on which the transmission power is reduced unnecessarily.

In some examples the indication of accuracy can be updated. The indication of accuracy can be updated in subsequent measurement intervals. This can enable different indications of accuracy and estimations for the lower bound to be used at different times. This enables changes in the UE 110 environment to be accounted for.

Variations to the above-described examples could be used in some implementations. For instance, in some examples the UE 110 can have capability to support a plurality of TX and RX chains. This can enable the UE 110 to perform radar measurements in parallel to communication with a network 100. For instance, a radar measurement could be made on 60GHz while a communication connection is ongoing on 28GHZ. In this example the large frequency separation enables the radar measurement to be made without disturbing the ongoing connection. In such examples the radar measurements can therefore comprise one or more measurements made during communications between the UE 110 and the network 100. In such cases the connection between the UE 110 and the network 100 can be ongoing while the radar measurements are made.

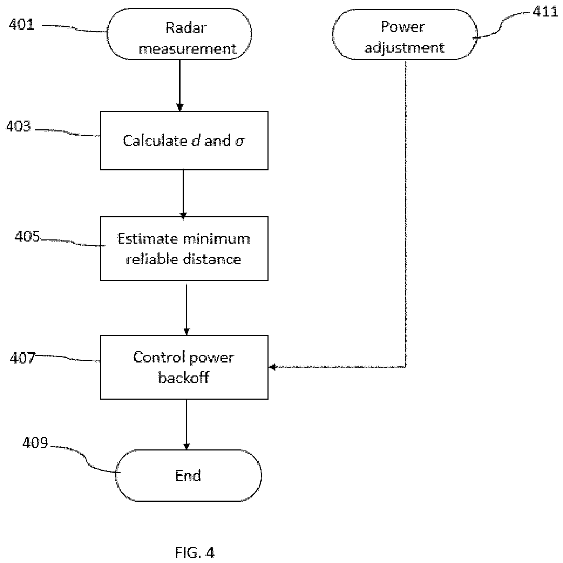

Fig. 4 shows another example method according to examples of the disclosure. The method could be implemented by a UE 110, a controller of a UE 110 or by any other suitable apparatus.

At block 401 radar measurements are made. The radar measurement can enable any objects near the UE 110 to be detected. The radar measurements are used to obtain the distance data. The distance data comprises a plurality of samples.

The radar measurements can be made during a measurement interval and/or at any other suitable time.

Any suitable process can be used to perform the radar measurement. The process can be a known process such as the OFDM radar concept or any other suitable process.

At block 403 a distance $d$ and a standard deviation $\sigma$ are calculated.

The calculation of the distance $d$ and the standard deviation $\sigma$ can be performed in the time domain. The equivalent complex baseband signal for an OFDM symbol used in the OFDM radar concept is:

$$x(t) = \sum_{k=0}^{N-1} X_k \, e^{j2\pi\Delta fkt}, \quad 0 \le t < T$$

Where $X_k$ is the data symbol for sub carrier $k$,

$T$ is the useful OFDM symbol duration,
$N$ is the number of subcarriers,
$k$ is the subcarrier index,
$\Delta f = 1/T$ is the subcarrier spacing

The reflection of the radar signals back to the UE 110 causes a phase shift in the signal. the phase shift is dependent upon the distance that the reflected signal has travelled and the frequency of the signal. The phase shift is therefore indicative of the distance to an object and is different for sub-carriers having different frequencies.

For a delay $\tau$, the phase shift on the $k^{th}$ subcarrier is $e^{-j2\pi\Delta fk\tau}$.

At the OFDM receiver, the dependency on the data symbol $X$ can be eliminated by performing an element-wise division per subcarrier:

$$H_k = Y_k/X_k = b_0 \, e^{-j2\pi\Delta fk\tau} \, e^{j\phi_0} + Z_k, \qquad k \in \{0,1,\ldots,N-1\}$$

Where $Y_k$ are the received data symbols, $b_0$ is the radar path attenuation, $\phi_0$ is a random phase rotation and $Z_k$ are samples from an Additive White Gaussian Noise (AWGN) process.

$H_k$ represents a discrete-time complex sine tone signal of $N$ samples. This enables the round-trip delay estimation problem to be transformed into spectral estimation of sinusoid(s) in AWGN.

Any suitable method can be used to estimate the frequencies of the noisy sinusoidal signals. The maximum likelihood (ML) estimation is given by the spectral position of the highest peak of the periodogram for the signal. The ML method can be effectively implemented using a Fast Fourier Transform (FFT) algorithm in combination with a numerical search procedure or by using any other suitable process.

The single complex-valued sine wave in noise can be written as,

$$H_k = A \, e^{j\Omega k} + Z_k, \qquad k \in \{0,1,\ldots,N-1\}$$

where the complex-valued amplitude $A$ and the angular frequency $\Omega \in (-\pi, \pi)$ are deterministic but unknown constants. The noise $Z_k$ is a zero mean complex-valued white Gaussian noise with variance $\sigma_N^2$. The Signal to Noise Ratio (*SNR*) is defined by:

$$SNR = \frac{|A|^2}{\sigma_N^2}$$

The estimated frequency of the dominant sinusoid within the signal described by $H_k$ can then be converted to the corresponding echo delay:

$$\Omega_{est} = 2\pi \, \Delta f \, \tau \;\Rightarrow\; \tau = \frac{\Omega_{est}}{2\pi \, \Delta f}$$

The signal round-trip delay from the transmitter to an object and back to the receiver can be written as:

$$\tau = 2d_{obj}/c_0$$

where $c_0$ is the speed of light
$d_{obj}$ is the distance to the object

Therefore, the frequency estimate can be translated directly into an estimated distance by:

$$d_{est} = \frac{1}{2}\tau c_0 = \frac{c_0}{4\pi\,\Delta f}\,\Omega_{est}$$

This gives one example of method that can be used to estimate a distance between an object and a UE 110 based on OFDM signals. Other distance estimation methods based on the transmitted and received signals of the UE 110 can be used.

The standard deviation $\sigma$ is an indication of accuracy of the distance d. Any suitable process can be used to determine the standard deviation $\sigma$ or other indications of accuracy that could be used.

In some examples the standard deviation $\sigma$ can be calculated from the SNR. The accuracy of the estimated distance for the respective OFDM symbols is dependent upon the number of OFDM subcarriers and the SNR.

The error variance of the echo delay $\Omega_{est}$, is bounded by the Cramer-Rao lower bound (CRB). The CRB is given by:

$$CRB(\Omega_{est}) = \frac{6}{SNR\ N\ (N^2 - 1)}$$

Where N is the number of samples. In examples of this disclosure N is the number of subcarriers.

The SNR can be estimated directly from the spectrum of $H_k$ by calculating the energy around the spectral position of the echo delay $\Omega_{est}$ of the periodogram relative to the noise energy.

The minimum standard deviation of the estimated distance $d_{est}$ is given by:

$$\sigma_d = min(std[d_{est}]) = \frac{c_0}{4\pi\,\Delta f}\sqrt{\frac{6}{SNR\ N\ (N^2 - 1)}}$$

In this method the standard deviation is measured per received OFDM symbol. This means that there no moving average estimates of the variance of $d_{est}$ are used. This reduces the estimation latency and can allow for immediate reduction of transmitted power if appropriate for the detected conditions.

In this method the estimation of the standard deviation an be made from a single measurement for the respective subcarriers. This provides for a faster calculation compared to making multiple measurements and reduces latency in the calculations.

In this example the standard deviation $\sigma$ is used as the indication of accuracy. Other parameters could be used in other examples. Also, other methods for determining the standard deviation $\sigma$ or other indication of accuracy could be used in other examples.

At block 405 a minimum reliable distance is estimated. The minimum reliable distance can be estimated using the distance d and a standard deviation $\sigma$ that were calculated at block 403.

The minimum reliable distance can be estimated as:

$$min\_dist = d_{est} - \alpha_m\sigma_d$$

Where $\alpha_m$ is a scaling factor. Different scaling factors can be provide different levels of reliability. The scaling factor can be selected and/or adjusted based on the implementation and the reliability that is to be attained. For example, increasing the scaling factor will decrease the reliable minimum distance. A scaling factor of three would reduce the estimated minimum distance to a level such that 0.1% of the data points would be outside of this range. This would give a reliable minimum distance measurement.

At block 409 power back off is controlled based on the estimated minimum reliable distance. The power back-off comprises reducing the transmitted power to avoid MPE for any nearby bodies.

At block 409 it can be determined whether or not there is a conflict between the estimated minimum reliable distance and any relevant MPE and/or Specific Absorption Rate (SAR) requirements. For example, if the estimated minimum reliable distance is below a threshold, it can be determined that an object is within a threshold distance of the UE 110. This can result in a conflict with the MPE and/or SAR requirements and so the power used for transmission would be reduced. If the estimated minimum reliable distance is above a threshold, it can be determined that an object is not within a threshold distance of the UE 110. This indicates that there is no conflict with the MPE and/or SAR requirements and so the power used for transmission would not be reduced.

Whether or not there is a conflict with the MPE and/or SAR requirements can depend on the distance to any detected bodies and also on the current transmitted power levels for the UE 110. As indicated at block 411, the transmitted power levels for the UE 110 could be adjusted for other purposes, such as closed loop power control. If the transmitted power levels are adjusted then the UE 110 can recalculate any reductions required for MPR/SAR requirements.

Examples of the disclosure therefore provide the benefit or increasing the reliability of radar measurements by dynamically taking the accuracy of the distance measurements to be taken into account. This can ensure that a safe and reliable minimum distance between the UE 110 and any nearby bodies can be maintained.

The use of low latency methods for determining the minimum reliable distance also provides for a higher throughput of data and can enable immediate reduction in transmitted power when appropriate.

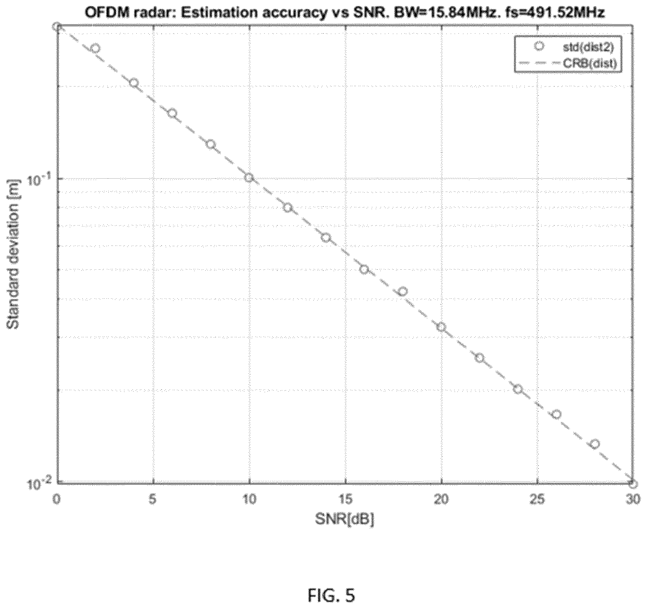

Fig. 5 shows simulation results. This example simulation used an OFDM radar implementation process with a 400 MHz FR2 uplink signal and a Sub Carrier Spacing (SCS) =120 kHz has been used with N=132 active subcarriers corresponding to an active bandwidth of 15.84 MHz.

Fig. 5 shows how the standard deviation compares to the CRB for positive values of SNR. This shows that the standard deviation is close to the CRB and therefore the accuracy of the estimated distances approaches the CRB for positive SNRs.

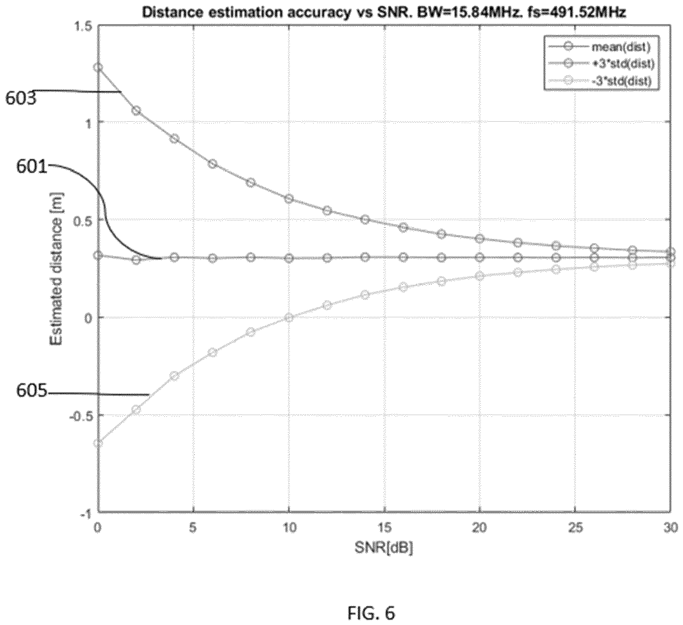

Fig. 6 shows more simulation results. This used the same parameters as used to obtain the data shown in Fig. 5. Fig. 6 shows estimates distance vs SNR for an object at a distance of 30.5 cm

The first plot 601 in Fig. 6 shows the mean estimated distance. The second plot 603 shows the mean estimated distance plus three standard deviations and the third plot 605 shows the mean estimated distance minus three standard deviations.

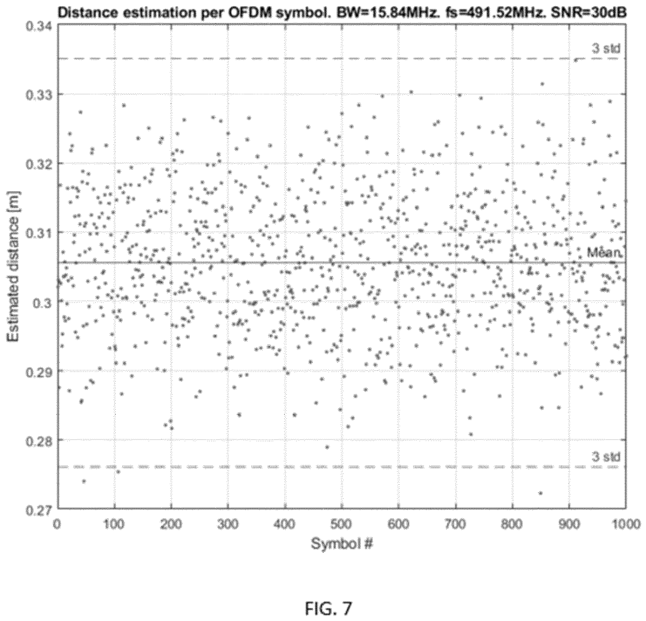

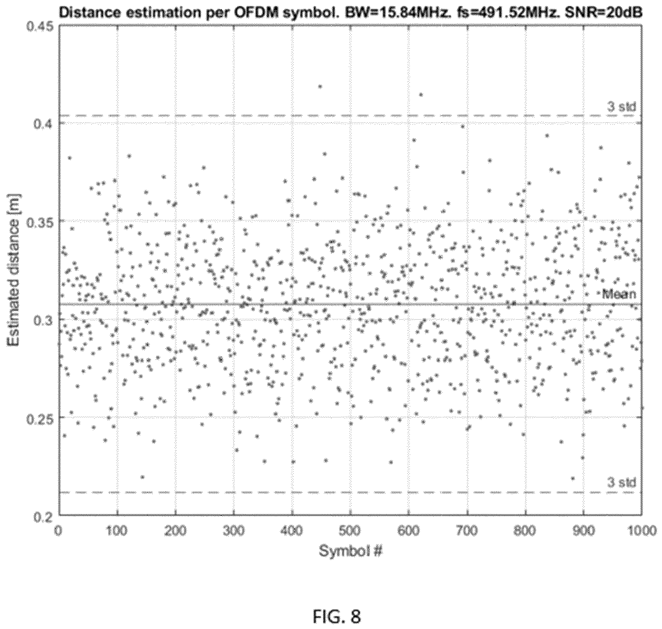

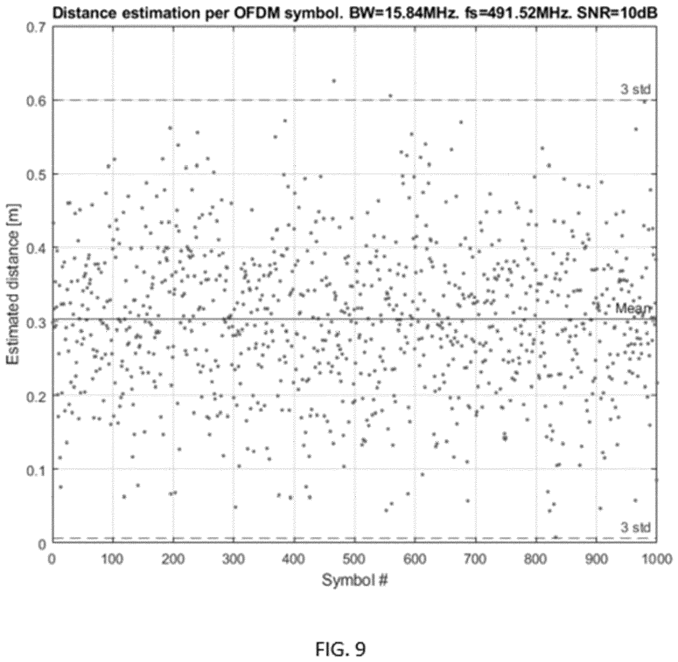

Figs. 7, 8 and 9 shows more simulation results. Figs. 7, 8 and 9 show the estimated distance for respective OFDM symbols for an object at a distance of 30.5 cm. In the example of Fig. 7 the SNR was set at 30dB. In the example of Fig. 8 the SNR was set at 20dB. In the example of Fig. 9 the SNR was set at 10dB. The upper and lower accuracy boundaries were chosen at plus three standard deviations and minus three standard deviations.

Figs. 7, 8 and 9 show that the accuracy of the estimated distance improves significantly with increasing SNR. Figs. 7, 8 and 9 also show that the majority of the distance estimates for the respective OFDM symbols fall within the boundary of plus/minus three standard deviations.

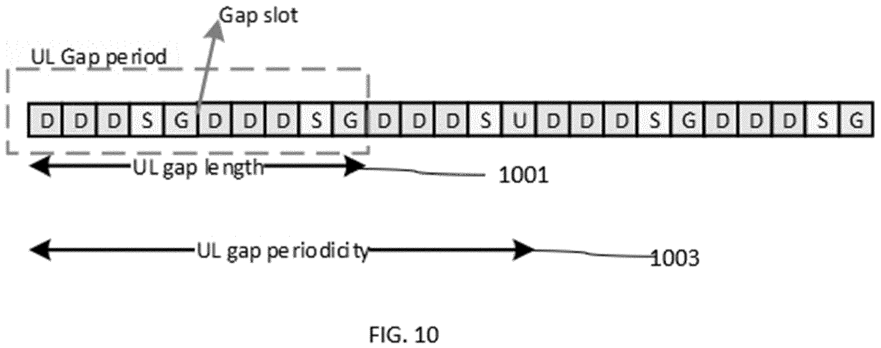

Fig. 10 shows an example measurement interval. In this example the measurement interval is a UL measurement gap. Other types of measurement interval could be used in other examples of the disclosure.

The UL measurement gap has a gap length indicated by the arrow 1001 and a gap periodicity as indicated by the arrow 1003. The gap length and the UL gap periodicity can be any suitable number of slots. The gap length and the gap periodicity can be determined by the gNB 120 or by any other suitable part of the network 100.

In the example of Fig. 10 the UL measurement gap consists of consecutive static UL slot(s) within the UL measurement gap length, defined by *nrofUplinkSlots* in one or more *TDD-UL-DL-Pattern* duration, starting from the first static UL slot of an UL gap repetition period. In the example of Fig. 10 the UL measurement gap consists of all consecutive static UL slots within the UL gap length There can be DL slot and/or special slot but no static UL slot between two succeeding static UL slots within an UL measurement gap length (UGL). UGL is defined as the aggregated length of UL slots used as UL measurement gap within an UL gap repetition period.

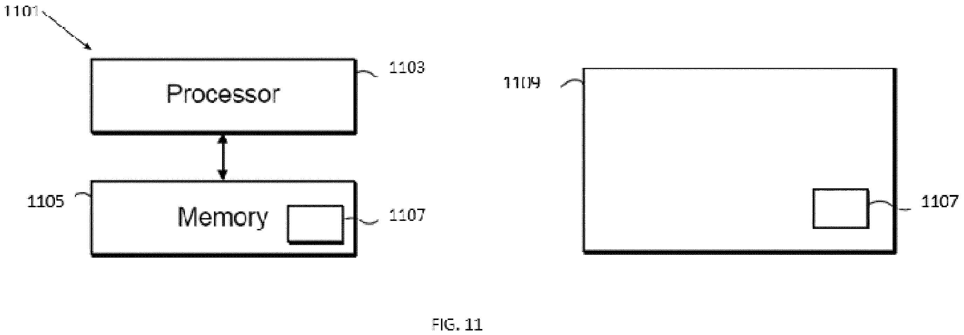

Fig. 11 illustrates an example of a controller 1101. The controller 1101could be provided within an apparatus such as a UE 110 or any other suitable device. Implementation of a controller 1101can be as controller circuitry. The controller 1101can be implemented in hardware alone, have certain aspects in software including firmware alone or can be a combination of hardware and software (including firmware).

As illustrated in Fig. 11 the controller 1101 can be implemented using instructions that enable hardware functionality, for example, by using executable instructions of a computer program 1107 in a general-purpose or special-purpose processor 1103 that may be stored on a computer readable storage medium (disk, memory etc.) to be executed by such a processor 1103.

The processor 1103 is configured to read from and write to the memory 1105. The processor 1103 may also comprise an output interface via which data and/or commands are output by the processor 1103 and an input interface via which data and/or commands are input to the processor 1103.

The memory 1105 stores a computer program 1107 comprising computer program instructions (computer program code) that controls the operation of the apparatus when loaded into the processor 1103. The computer program instructions, of the computer program 1107, provide the logic and routines that enables the apparatus to perform the methods illustrated in Figs. 3 to 4 The processor 1103 by reading the memory 1105 is able to load and execute the computer program 1107.

The controller 1101 therefore provides an apparatus that comprises: at least one processor 1101; and at least one memory 1105 including computer program code; the at least one memory 1105 storing instructions that, when executed by the at least one processor 1103, cause the apparatus at least to perform;

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

The computer program 1107 may arrive at the apparatus or network apparatus via any suitable delivery mechanism 1109. The delivery mechanism 1109 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 1107. The delivery mechanism may be a signal configured to reliably transfer the computer program 1107. The apparatus may propagate or transmit the computer program 1107 as a computer data signal.

The computer program 1107 can comprise computer program instructions for causing an apparatus to perform at least the following or for performing at least the following:

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

The computer program instructions may be comprised in a computer program, a non-transitory computer readable medium, a computer program product, a machine readable medium. In some but not necessarily all examples, the computer program instructions may be distributed over more than one computer program.

Although the memory 1105 is illustrated as a single component/circuitry it may be implemented as one or more separate components/circuitry some or all of which may be integrated/removable and/or may provide permanent/semi-permanent/ dynamic/cached storage.

Although the processor 1103 is illustrated as a single component/circuitry it may be implemented as one or more separate components/circuitry some or all of which may be integrated/removable. The processor 1103 may be a single core or multi-core processor.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Explicitly indicate that features from different examples (e.g. different methods with different flow charts) can

EP 4 283 334 A1

be combined, to

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising means for:

    obtaining distance data from one or more radar measurements wherein the radar measurements are performed during a measurement interval;
    determining an indication of accuracy from the obtained distance data;
    determining a lower bound for a reliable distance measurement based on the distance data and the indication of accuracy; and
    controlling transmitted power based on the lower bound for a reliable distance measurement.

2. An apparatus as claimed in claim 1 wherein the indication of accuracy is based on a standard deviation of the obtained distance data.

3. An apparatus as claimed in claim 2 wherein the standard deviation is determined based on a signal to noise ratio from the obtained distance data.

4. An apparatus as claimed in any of claims 2 to 3 wherein the indication of accuracy is determined using a Cramer-Rao lower bound.

5. An apparatus as claimed in any preceding claim wherein the lower bound for a reliable distance measurement is determined by subtracting the standard deviation adjusted by a scaling factor from the obtained distance data.

6. An apparatus as claimed in any preceding claim wherein a power level used for transmission is reduced if the lower bound for a reliable distance measurement is below a threshold.

7. An apparatus as claimed in any preceding claim wherein the means are for updating the indication of accuracy in a subsequent measurement interval.

8. An apparatus as claimed in any preceding claim wherein the measurement interval comprises at least one of: an uplink (UL) gap, a downlink (DL) gap, measurement windows, unscheduled slots.

9. An apparatus as claimed in any preceding claim wherein the radar measurements are at least one of: in band measurements, out-of-band measurements.

10. An apparatus as claimed in any preceding claim wherein the radar measurements comprise one or more measurements made during an ongoing connection.

11. An apparatus as claimed in any preceding claim wherein the apparatus comprises a UE.

12. A method comprising:

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

13. A method as claimed in claim 12 wherein the indication of accuracy is based on a standard deviation of the obtained distance data.

14. A computer program comprising computer program instructions that, when executed by processing circuitry, cause:

obtaining distance data from one or more radar measurements wherein the radar measurements are performed during a measurement interval;
determining an indication of accuracy from the obtained distance data;
determining a lower bound for a reliable distance measurement based on the distance data and the indication of accuracy; and
controlling transmitted power based on the lower bound for a reliable distance measurement.

15. A computer program as claimed in claim 14 wherein the indication of accuracy is based on a standard deviation of the obtained distance data.

FIG. 1

FIG. 2

FIG. 3

401 — Radar measurement

Power adjustment — 411

403 — Calculate $d$ and $\sigma$

405 — Estimate minimum reliable distance

407 — Control power backoff

409 — End

FIG. 4

FIG. 5

FIG. 6

FIG. 7

FIG. 8

Distance estimation per OFDM symbol. BW=15.84MHz. fs=491.52MHz. SNR=10dB

FIG. 9

FIG. 10

FIG. 11

EP 4 283 334 A1

**EP 4 283 334 A1**

Europäisches
Patentamt

European
Patent Office

Office européen
des brevets

# EUROPEAN SEARCH REPORT

Application Number

EP 22 17 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/411960 A1 (NG BOON LOONG [US] ET AL) 31 December 2020 (2020-12-31) * abstract * * paragraphs [0002], [0080], [0081], [0084], [0085], [0108]; figures 1,8,9 * ----- | 1,6-12, 14 | INV. G01S13/08 G01S7/02 H04B1/3827 |
| X | US 2021/103028 A1 (ZHANG NAN [US] ET AL) 8 April 2021 (2021-04-08) * abstract * * paragraphs [0004], [0017], [0020], [0039], [0071] - [0074], [0082], [0044], [0048], [0057]; figures 1-3,7 * ----- | 1,6-12, 14 | |
| X | US 2022/091247 A1 (CETINONERI BERKE [US] ET AL) 24 March 2022 (2022-03-24) * abstract * * paragraphs [0002], [0065]; figures 6,9 * ----- | 1,6-12, 14 | |
| X | US 2021/211152 A1 (KENNEY THOMAS [US] ET AL) 8 July 2021 (2021-07-08) * abstract * * paragraphs [0081] - [0092], [0178]; figures 1,4 * ----- | 1,6-12, 14 | TECHNICAL FIELDS SEARCHED (IPC) G01S H04B |

The present search report has been drawn up for all claims

| Place of search | Date of completion of the search | Examiner |
|---|---|---|
| Munich | 31 October 2022 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 22 17 5014

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2022

| Patent document cited in search report | | Publication date | Patent family member(s) | | Publication date |
|---|---|---|---|---|---|
| US 2020411960 | A1 | 31-12-2020 | CN | 114008473 A | 01-02-2022 |
| | | | EP | 3959821 A1 | 02-03-2022 |
| | | | KR | 20220023349 A | 02-03-2022 |
| | | | US | 2020411960 A1 | 31-12-2020 |
| | | | WO | 2020262859 A1 | 30-12-2020 |
| US 2021103028 | A1 | 08-04-2021 | CN | 114502972 A | 13-05-2022 |
| | | | EP | 4038413 A1 | 10-08-2022 |
| | | | KR | 20220076459 A | 08-06-2022 |
| | | | TW | 202131013 A | 16-08-2021 |
| | | | US | 2021103028 A1 | 08-04-2021 |
| | | | WO | 2021067138 A1 | 08-04-2021 |
| US 2022091247 | A1 | 24-03-2022 | US | 2020300996 A1 | 24-09-2020 |
| | | | US | 2022091247 A1 | 24-03-2022 |
| US 2021211152 | A1 | 08-07-2021 | CN | 115119160 A | 27-09-2022 |
| | | | EP | 4060901 A1 | 21-09-2022 |
| | | | US | 2021211152 A1 | 08-07-2021 |

EPO FORM P0459

For more details about this annex : see Official Journal of the European Patent Office, No. 12/82